# EUROPEAN PATENT APPLICATION

(11) **EP 4 749 883 A1**
(43) Date of publication of application: **27.05.2026**
(21) Application number: 25217360.4
(22) Date of filing: 20.11.2025
(51) Int. Cl.: H02J 7/52, H02J 7/50, H02J 7/90

(54) **BATTERY PACK AND BATTERY CHARGING METHOD USING THE SAME**

(30) Priority: 26.11.2024 KR 20240170396
(71) Applicant: SAMSUNG SDI CO., LTD., Yongin-si, Gyeonggi-do 17084 (KR)
(72) Inventor: KIM, Hyeon Woo, 16678 Suwon-si (KR); HWANG, Yu Bin, 16678 Suwon-si (KR)
(74) Representative: Marks & Clerk LLP

(57) **Abstract**

The present disclosure relates to a battery pack and a battery charging method using the same and is directed to providing a mechanism capable of effectively charging a battery quickly. To this end, the present disclosure provides a plurality of charging switches, each of which is connected to one of a battery cells, a first switch connected to a first battery cell charged by a charge pulse, a second switch which connects a second battery cell to the first battery cell, and a charging control device which charges the first battery cell and the second battery cell by controlling at least one of the plurality of charging switches, the first switch, and the second switch to be turned on or off according to an on/off-time of the charge pulse when the plurality of battery cells are charged through pulse charging.

## Description

### FIELD

The present disclosure relates to a battery pack and a method of effectively charging a battery quickly using the same.

### BACKGROUND

With increases in the prices of energy sources due to the depletion of fossil fuels and an increase in interest in environmental pollution, the demand for secondary batteries as eco-friendly alternative energy sources is rapidly increasing.

Such secondary batteries can be repeatedly charged and discharged and thus are being applied to small devices, such as mobiles, notebooks, etc., to large industrial field, such as vehicles, robots, energy storages, etc., as a countermeasure for current issues of environmental regulations and high oil prices.

Among secondary batteries, lithium secondary batteries have attracted attention due to their advantages such as few memory effects, low self-discharge rates, and high energy densities compared to nickel-based secondary batteries.

With the commercialization of power driving devices such as electric vehicles, electric motorcycles, electric bicycles, etc., the demand for high-capacity and high-performance batteries is increasing. However, as the battery capacity has increased, the disadvantage of the increasing time required for battery charging has emerged. In order to solve this problem, technology for quick charging a battery is being developed, but there is a concern that the degradation of the battery can be accelerated by the quick charging.

Particularly, during a process of quickly charging a battery, a phenomenon in which lithium is precipitated from a surface of a negative electrode (Li-plating) may occur. When the lithium is precipitated from the surface of the negative electrode, a negative reaction with an electrolyte, a change in kinetic balance, and the like can occur, which reduces a lifetime of the battery.

The herein information disclosed in this Background section is for enhancement of understanding of the background of the present disclosure, and therefore, it may contain information that does not constitute related or prior art.

### SUMMARY

The present disclosure is directed to providing a battery pack and a method of effectively charging a battery quickly using the same.

However, objects that the present disclosure intends to achieve are not limited to the herein-described objects and other objects that are not described may be clearly understood by those skilled in the art from the following description.

According to an aspect of the present disclosure, there is provided a battery pack including a plurality of battery cells, a plurality of charging switches, each of which is connected to one of the battery cells, a first switch connected to at least a first battery cell charged by a charge pulse among the plurality of battery cells, a second switch which connects a second battery cell which is a remaining battery cell excluding the first battery cell among the plurality of battery cells to the first battery cell, and a charging control device which charges the first battery cell and the second battery cell by controlling at least one of the plurality of charging switches, the first switch, and the second switch to be turned on or off according to an on/off-time of the charge pulse when the plurality of battery cells are charged through pulse charging.

In the present disclosure, each of the plurality of charging switches may be connected to a corresponding battery cell in series.

In the present disclosure, the first switch may be turned on for the on-time of the charge pulse and turned off for the off-time of the charge pulse during the pulse charging.

In the present disclosure, the second switch may be turned off for the on-time of the charge pulse and turned on for the off-time of the charge pulse during the pulse charging.

In the present disclosure, the first battery cell may be charged by the charge pulse for the on-time of the charge pulse, and the second battery cell may be charged by a discharge current of the first battery cell for the off-time of the charge pulse.

In the present disclosure, the charging control device may control at least one of the plurality of charging switches, the first switch, and the second switch to be turned on or off for the on-time of the charge pulse to charge the first battery cell and control at least one of the plurality of charging switches, the first switch, and the second switch to be turned on or off for the off-time of the charge pulse such that the second battery cell is charged by a discharge current discharged by the first battery cell.

In the present disclosure, the charging control device may charge the first battery cell by, among the plurality of charging switches, turning on a first charging switch connected to the first battery cell, turning off a second charging switch connected to second battery cell, turning on the first switch, turning off the second switch, and providing the charge pulse to the first battery cell for the on-time of the charge pulse.

In the present disclosure, the charging control device may control the at least one of the plurality of charging switches, the first switch, and the second switch to be turned on or off to apply the discharge current discharged by the first battery cell to the second battery cell for the off-time of the charge pulse such that a charge amount of the second battery cell becomes the same as a charge amount of the first battery cell.

In the present disclosure, the charging control device may repeat a process of turning on the first charging switch connected to a foremost first battery cell, turning off the first charging switch connected to a remaining first battery cell, turning off the first switch, turning on the second switch, applying a discharge current of the foremost first battery cell to the second battery cell, turning off the charging switch connected to the foremost first battery cell, turning on a charging switch connected to a next first battery cell, and applying a discharge current of the next first battery cell to the second battery cell.

In the present disclosure, when the plurality of battery cells include N first battery cells and M second battery cells, the charging control device may perform control such that the first battery cells are charged by providing a charge pulse with an amount of Y to the N first battery cells for the on-time of the charge pulse, and the N first battery cells provide a discharge current with the amount of Y to the M second battery cells for a time of K which is the off-time of the charge pulse.

In the present disclosure, each of the M second battery cells may be charged with a current with an amount of Y/M for a time of NK for which the discharge current flows from the N first battery cells.

According to another aspect of the present disclosure, there is provided a method of charging a battery pack which includes a plurality of charging switches, each of which is connected to one of a plurality of battery cells, a first switch connected to at least a first battery cell, and a second switch connecting at least one second battery cell to the first battery cell, the method including charging, by a charging control device, the first battery cell by controlling at least one of the plurality of charging switches, the first switch, and the second switch to be turned on or off and providing a charge pulse to the first battery cell for an on-time of the charge pulse and controlling, by the charging control device, at least one of the plurality of charging switches, the first switch, and the second switch such that the second battery cell is charged by a discharge current discharged by the first battery cell for an off-time of the charge pulse.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view illustrating a battery pack according to embodiments of the present disclosure;
FIG. 2 is a timing diagram for describing a charge pulse and a discharge pulse of pulse charging according to embodiments of the present disclosure;
FIGS. 3A and 3B are timing diagrams for describing conventional pulse charging;
FIGS. 4A to 4E are example views for describing the pulse charging according to embodiments of the present disclosure;
FIGS. 5A to 5D are timing diagrams for the pulse charging of battery cells illustrated in FIGS. 4B to 4E;
FIG. 6 is an example view for describing a pulse charging effect according to embodiments of the present disclosure;
FIGS. 7A to 7E are example views for describing pulse charging according to another embodiment of the present disclosure; and
FIGS. 8A to 8D are timing diagrams for the pulse charging of a battery cell illustrated in FIGS. 7B to 7E.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure. Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element s or feature s as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented rotated 90 degrees or at other orientations, and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between and including the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed or located or positioned on the "above or below" or "on or under" a component, it may mean that the arbitrary element is placed in contact with the upper or lower surface of the component and may also mean that another component may be interposed between the component and any arbitrary element disposed or located or positioned on or under the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

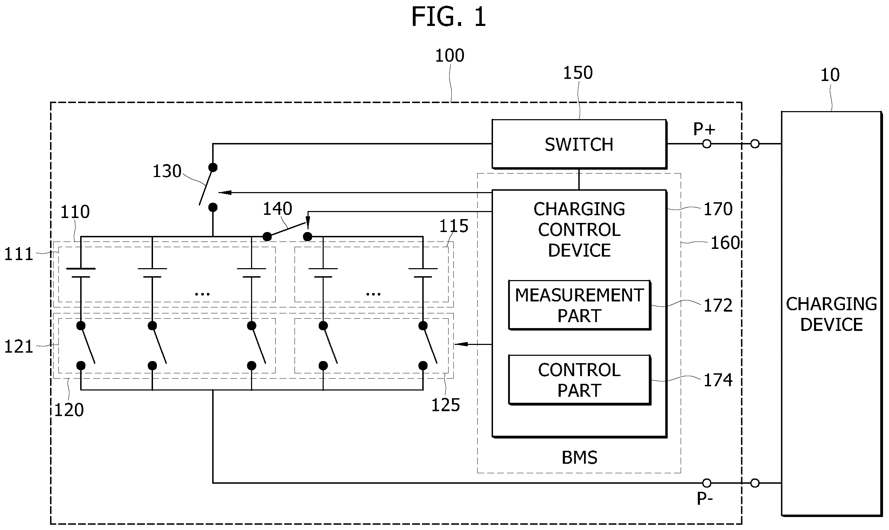

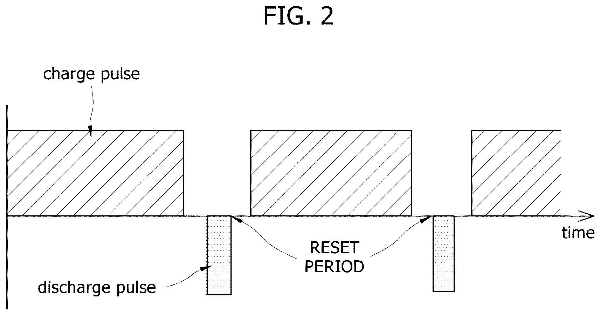

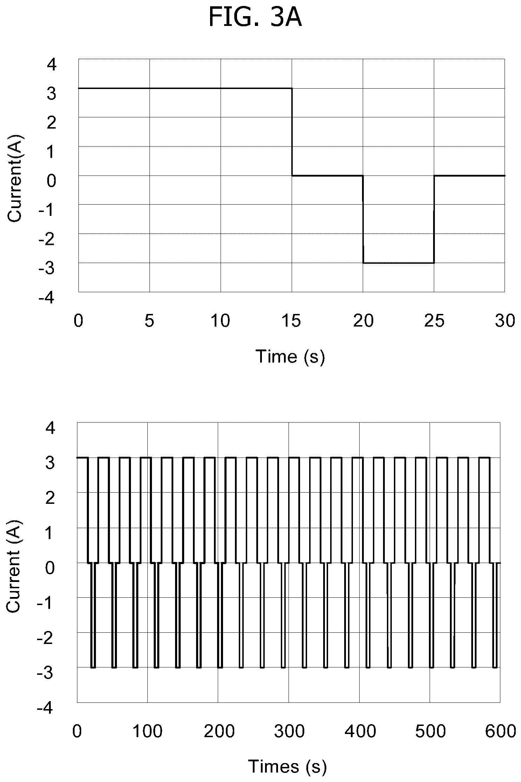

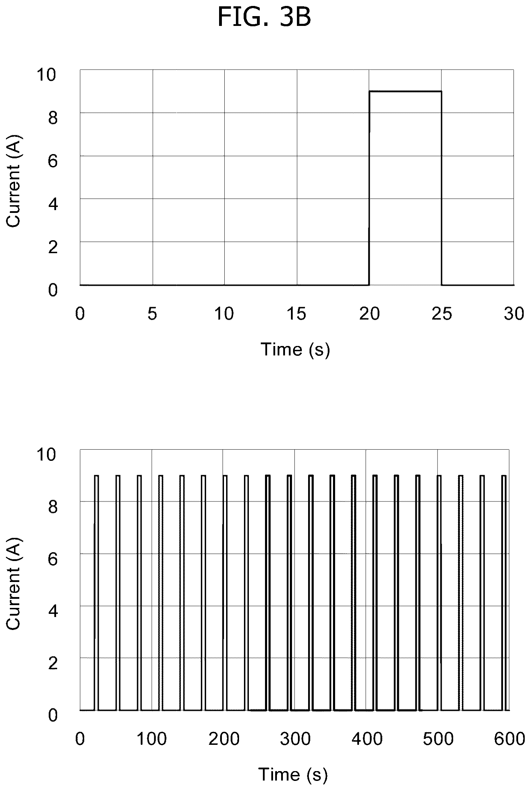

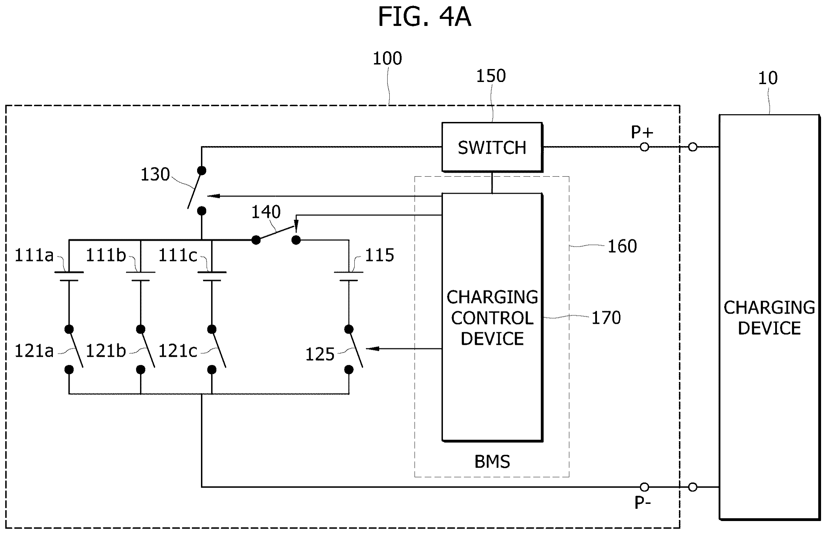

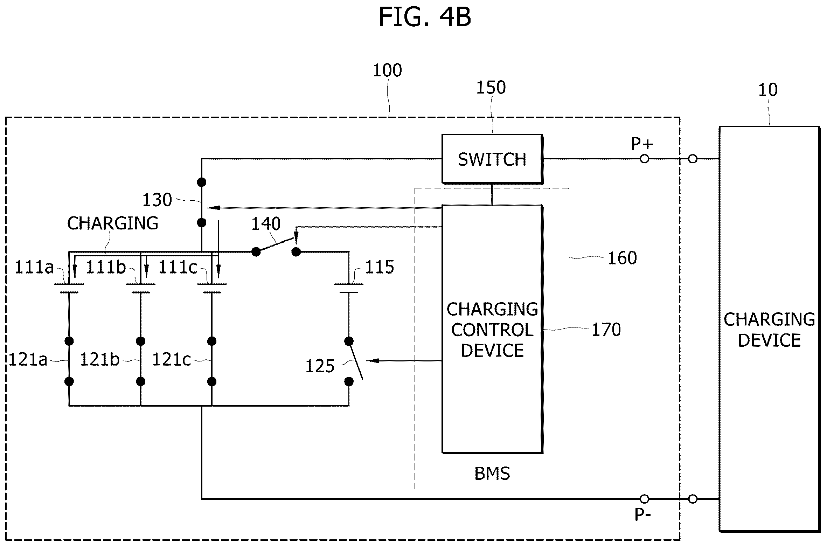

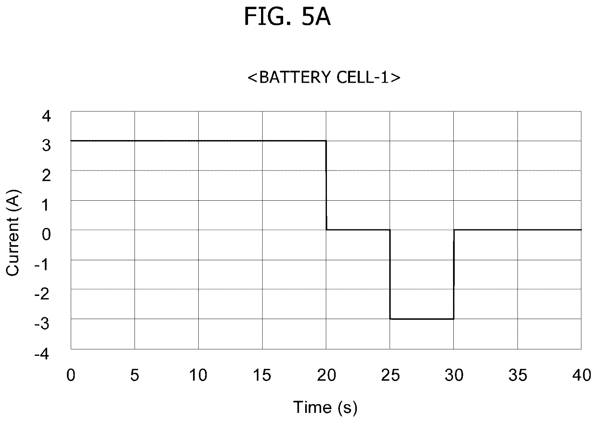

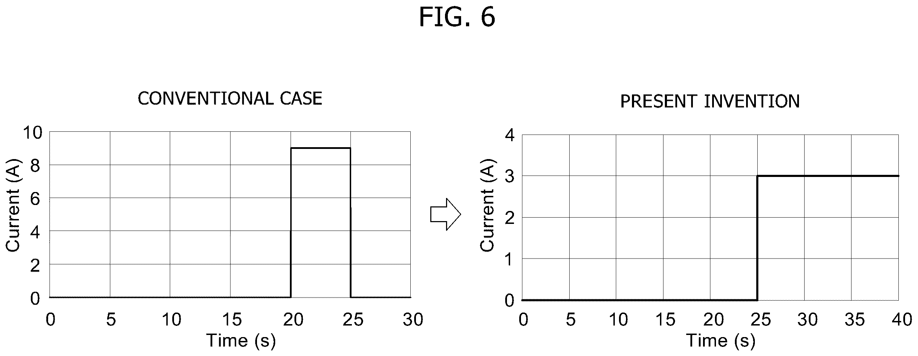

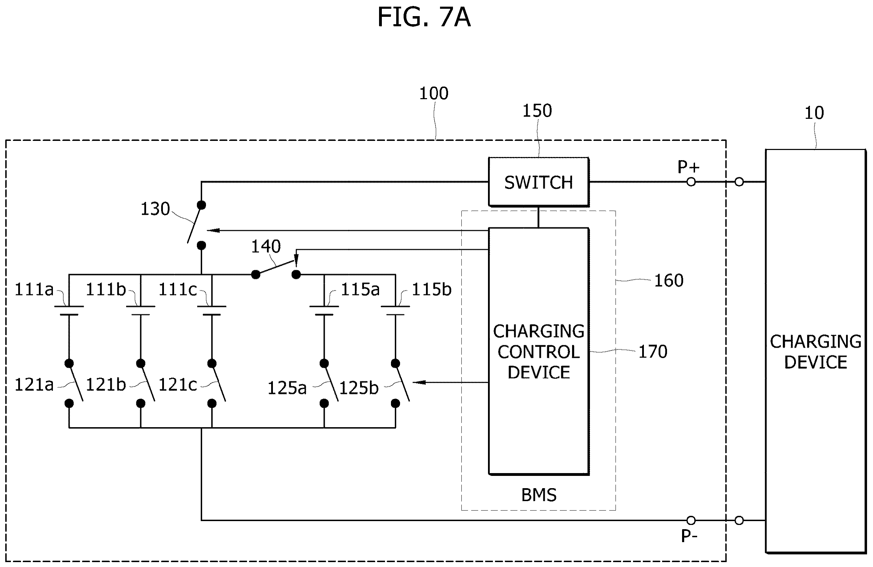

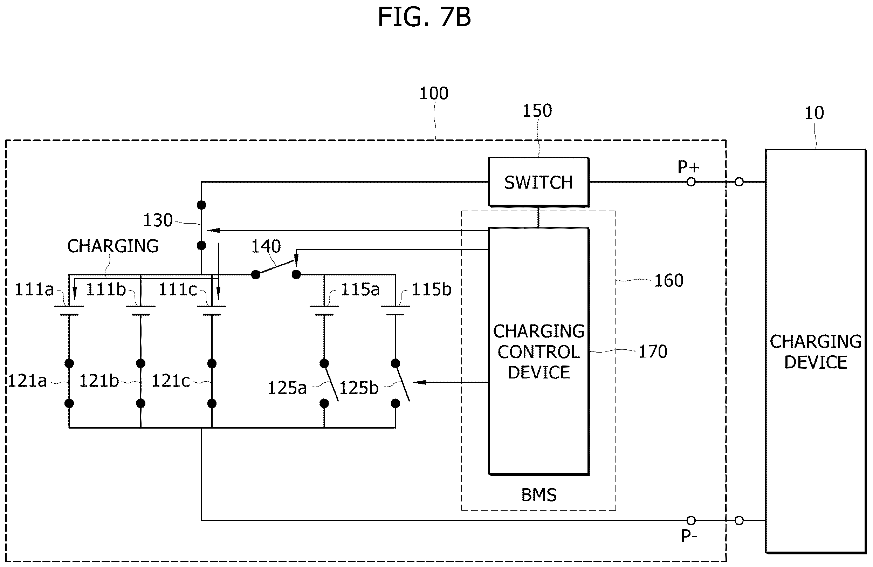

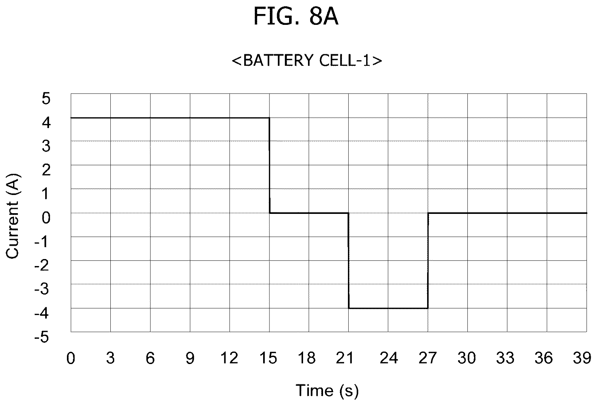

FIG. 1 is a schematic view illustrating a battery pack according to embodiments of the present disclosure, and FIG. 2 is a timing diagram for describing a charge pulse and a discharge pulse of pulse charging according to embodiments of the present disclosure. FIGS. 3A and 3B are timing diagrams for describing conventional pulse charging, and FIGS. 4A to 4E are example views for describing the pulse charging according to embodiments of the present disclosure. FIGS. 5A to 5D are timing diagrams for the pulse charging of battery cells illustrated in FIGS. 4B to 4E, and FIG. 6 is an example view for describing a pulse charging effect according to embodiments of the present disclosure. FIGS. 7A to 7E are example views for describing pulse charging according to another embodiment of the present disclosure, and FIGS. 8A to 8D are timing diagrams for the pulse charging of a battery cell illustrated in FIGS. 7B to 7E.

Referring to FIG. 1, a battery pack 100 according to embodiments of the present disclosure has a structure which may be electrically connected to a charging device 10 through a positive connecting terminal P+ and a negative connecting terminal P-.

The charging device 10 may be a device which supplies power to the battery pack 100 to charge a plurality of batteries 110. That is, the charging device 10 may be electrically connected to the batteries 110 to charge the batteries 110.

The charging device 10 may be connected to a charging control device 170. The charging device 10 may be connected to the charging control device 170 through control area network (CAN) communication. Accordingly, the charging device 10 may supply a charge current to the battery 110 according to a charge current value received from the charging control device 170. In other words, the charging device 10 may supply the charge current of which an amount is determined by the charging control device 170 to the batteries 110 to charge the batteries 110.

The battery pack 100 may include at least one battery 110, a plurality of charging switches 121 and 125 (a plurality of charging switches 120), a first switch 130, a second switch 140, a switch 150, and a battery management system (BMS) 160. In various embodiments, the battery pack 100 may further include other components. In this case, the battery 110 may be the same as a battery module or the like.

The battery 110 may include a plurality of battery cells 111 and 115 connected in series or in parallel. The plurality of battery cells 111 and 115 may be connected in series or in parallel. The battery 110 may be connected to the charging device 10 and charged by a charge current supplied from the charging device 10. In this case, the charge current may be adjusted and provided by the charging control device 170 to have an amount of a charge current that does not cause lithium precipitation in consideration of a state of charge (SoC) of the battery 110.

Each of the battery cells 111 and 115 may be connected to one of the charging switches 120 in series. The charging switches 120 may be switches for charging or discharging the battery cells 111 and 115. The charging switches 120 may be implemented as mechanical relays (contactor), each of which is turned on/off by a magnetic force of a coil or a semiconductor switch such as a metal oxide semiconductor field effect transistor (MOSFET).

The charging switches 120 may be controlled by the charging control device 170.

The plurality of battery cells 111 and 115 may include a plurality of first battery cells 111 charged by a charge pulse (constant current) and at least one second battery cell 115 charged by a discharge pulse (reverse current) when pulse charging is performed.

The plurality of first battery cells 111 may be connected by the first switch 130. When the pulse charging is performed, the first switch 130 may be turned on for a charge pulse period and turned off for an idle period (reset period). That is, the first switch 130 may be turned on for an on-time of the charge pulse and turned off for an off-time of the charge pulse. Accordingly, the first switch 130 may be a switch which determines whether to apply the charge pulse (constant current). The first switch 130 may be controlled by the charging control device 170.

The plurality of first battery cells 111 and at least one second battery cell 115 may be connected by the second switch 140. When the pulse charging is performed, the second switch 140 may be turned off for the charge pulse period and turned on for the idle period (reset period). That is, the second switch 140 may be turned off for the on-time of the charge pulse and turned on for the off-time of the charge pulse. Accordingly, the second switch 140 may be a switch which determines whether to apply the discharge pulse (reverse current). The second switch 140 may be controlled by the charging control device 170.

Each of the first switch 130 and the second switch 140 may be implemented as a mechanical relay (contactor) turned on/off by a magnetic force of a coil or a semiconductor switch such as a MOSFET.

The switch 150 may be connected to at least one of a plurality of pack terminals P+ and P- to block/allow electrical connection between the battery 110 and the charging device 10. The switch 150 may be installed on a current path for charging or discharging the battery 110.

The switch 150 may control electrical connection between the battery pack 100 and the charging device 10. When the switch 150 is turned on, the battery pack 100 and the charging device 10 may be electrically connected to perform charging or discharging. When the switch 150 is turned off, the battery pack 100 and the charging device 10 may be electrically disconnected. That is, when the switch 150 is turned on, power may be supplied to the charging device 10 from the battery 110, or power may be supplied to the battery 110 from the charging device 10. While the switch 130 is turned off, the charging or discharging of the battery 110 may be stopped. In this case, the switch 150 may be turned on or off by control of the BMS 160.

The switch 150 may be implemented as a mechanical relay (contactor) turned on/off by a magnetic force of a coil or a semiconductor switch such as a MOSFET.

The BMS 160 may monitor a voltage, a current, and a temperature of the battery 110, calculate an SoC, and control charging and discharging on the basis of the monitoring result. In this example, the SoC is a state shown as a percentage [%] at which the battery 110 is charged, and a state of health (SoH) of a battery is a state shown as a percentage [%] at which the battery 110 is currently degraded.

As described herein, the BMS 160 may monitor the battery cells 111 and 115, check cell voltages, and transmit the checked cell voltages to another system connected to the battery 110.

In addition, the BMS 160 may monitor at least one electric component constituting a battery system and transmit state data thereof to the other system. To this end, the BMS 160 may include a communication module for communication with the other system in a device included in the battery system.

The BMS 160 uniformly balances charges of the battery cells 111 and 115 in order to increase a lifetime of the battery system.

In order to perform these operations, the BMS 160 may include various components such as a fuse, a current sensing element, a thermistor, a switch, and a balancer and typically further includes a micro controller unit (MCU), a battery monitoring integrated chip (BMIC), or the like for performing control in conjunction therewith.

Meanwhile, the charging control device 170 according to the embodiment of the present disclosure may be provided as a component of the BMS 160 to control quick charging of the battery 110.

A current should be provided at a high rate to quickly charge the battery 110. When the current is provided at a high rate to charge the battery 110, an imbalance in SoC between the battery cells 111 and 115 may become serious and decrease a lifetime of the battery. The charging control device 170 may use pulse charging in order to solve this problem.

The pulse charging involves providing a charge pulse including charge pulse periods and idle periods (reset periods) to charge the battery 110. In the pulse charging, the idle (reset) periods are present between the charge pulse periods to provide a time for which the battery cells 111 and 115 are internally balanced. As illustrated in FIG. 2, in the pulse charging, a case in which the battery cells 111 and 115 are discharged for a short time in the idle period (reset period) may occur. In this case, the battery cells 111 and 115 may be internally balanced in a shorter time when compared to pulse charging in which reset is simply performed.

Accordingly, the charging control device 170 may charge the battery 110 using a discharge current (reverse current) generated when the pulse charging is performed.

For example, it will be assumed in the description that the battery 110 includes four battery cells 111 and 115, of which three battery cells 111 are charged by a charge pulse (charge current or constant current) for an on-time of the charge pulse, and the remaining one battery cell 115 is charged by a discharge current (reverse current) generated for an off-time of the charge pulse. In this case, as illustrated in FIG. 3A, the charging control device 170 provides the charge pulse (charge current or constant current) to the battery cells 111 for the on-time of the charge pulse to charge the three battery cells 111. In addition, the charging control device 170 provides the reverse current (discharge current) generated in the three battery cells 111 to the remaining one battery cell 115 to charge the remaining one battery cell 115. In this case, as illustrated in FIG. 3B, the battery cell 115 to be charged by the reverse current (discharge current) receives three times the current of each of the battery cells 111 at once. This may adversely affect a lifetime of the battery cells 111 and 115.

Accordingly, when the charging control device 170 according to the present disclosure charges the plurality of battery cells 111 and 115 using the pulse charging, as at least one of the plurality of charging switches 120, the first switch 130, and the second switch 140 is controlled to be turned on or off according to the on/off-time of the charge pulse, a high current may be prevented from suddenly flowing to the battery cells 115 to be charged by the reverse current (discharge current) so that the lifetime of the battery cells 115 is not adversely affected.

The charging control device 170 may include a measurement part 172 and a control part 174.

The measurement part 172 may measure a voltage, a current, or the like at both ends of the battery cells 111 and 115 and transmit measurement information such as the measured current or voltage to the control part 174. In this case, the measurement information may include at least one of information such as an SoC, a voltage (V), a current (I), and the like of the battery cells 111 and 115.

The measurement part 172 may measure cell voltages of the plurality of battery cells 111 and 115 of the battery 110. For example, as the measurement part 172 measures the voltages at both ends of the plurality of battery cells 111 and 115, cell voltages of the battery cells 111 and 115 may be measured. In this case, the measurement part 172 may measure the cell voltages of the battery cells 111 and 115 through various methods, and the voltage measurement method is not limited in the present disclosure. The measurement part 172 may also measure cell currents flowing into or out of the plurality of battery cells 111 and 115.

Accordingly, the measurement part 172 may include a voltage sensor configured to measure the cell voltages of the plurality of battery cells 111 and 115. In addition, the measurement part 172 may further include a current sensor configured to measure cell currents of the plurality of battery cells 111 and 115.

A central processing unit (CPU) or a system on chip (SoC) may be implemented as the control part 174 for controlling charging and discharging of the battery 110, and an operating system or application may be driven to control a plurality of hardware or software components connected to the control part 174 and may perform various data processing and operations. Particularly, in the embodiment, the control part 174 may correspond to an analog front end (AFE) integrated circuit (IC) or a micro controller unit (MCU) of the BMS 160 which monitors a voltage, a current, and a temperature of the battery cells 111 and 115 and a state of the battery 110 such as an SoC and controls charging or discharging of the battery cells 111 and 115 on the basis of a monitoring result.

The control part 174 may control turning on or off of at least one of the plurality of charging switches 120, the first switch 130, and the second switch 140. In this case, the control part 174 may output a switching control signal for controlling at least one switch of the plurality of charging switches 120, the first switch 130, and the second switch 140 through a switching line (not shown).

The control part 174 may control turning on/off of the plurality of charging switches 120, the first switch 130, and the second switch 140 to charge the first battery cells 111 for the on-time of the charge pulse. In addition, the control part 174 may control the turning on/off of the plurality of charging switches 120, the first switch 130, and the second switch 140 such that the first battery cells 111 charge the second battery cell 115 using the discharge current (reverse current) for the off-time of the charge pulse. In this case, an amount of the charge current of the charge pulse may vary according each charge pulse during a charging process.

Specifically, among the plurality of charging switches 120, the control part 174 may turn on first charging switches 121 connected to the first battery cells 111, turn off a second charging switch 125 connected to the second battery cell 115, turn on the first switch 130, and turn off the second switch 140. Then, the control part 174 may provide a charge pulse (charge current or constant current) to the first battery cells 111 for an on-time of the charge pulse. Then, the first battery cells 111 may be charged by the charge pulse (charge current or constant current).

When the first battery cells 111 are completely charged for the on-time of the charge pulse, the control part 174 may supply a discharge current (reverse current) discharged by the first battery cell 111 to the second battery cell 115 according to a preset order for the off-time of the charge pulse and charge the second battery cell 115 such that a final charge amount of the second battery cell 115 becomes the same as a charge amount of each of the first battery cells 111. To this end, the control part 174 may turn on the first charging switch 121 connected to the foremost first battery cell 111, turn off the first charging switches 121 connected to the remaining first battery cells 111, turn off the first switch 130, and turn on the second switch 140 to supply a discharge current (reverse current) of the foremost first battery cell 111 to the second battery cell to charge the second battery cell. Then, the control part 174 may turn off the charging switch connected to the foremost first battery cell 111 and turn on the charging switch connected to the next first battery cell 111 to supply a discharge current (reverse current) of the next first battery cell 111 to the second battery cell to charge the second battery cell.

For example, a method of charging the battery 110 using the charging control device 170 in a case in which there are N first battery cells 111 and M second battery cells, will be described.

In this case, in order to supply a charge current to N first battery cells 111, the charging control device 170 may turn on the first charging switches 121 connected to the first battery cells 111, turn off the second charging switches 125 connected to the second battery cells, turn on the first switch 130, and turn off the second switch 140. Then, the control part 174 may provide a charge pulse (charge current) with an amount of Y to the first battery cells 111 for an on-time (of X) of the charge pulse. That is, the charging control device 170 may provide a positive current with the amount of Y to the first battery cells 111 for the time of X. Then, the first battery cells 111 may be charged by the charge pulse (charge current).

When the first battery cells 111 are charged with the current with the amount of Y, the charging control device 170 may control the supply of the charge current to be stopped for an off-time (of K) of the charge pulse and control N first battery cells 111 sequentially to provide a discharge current (reverse current) with the amount of Y to the second battery cells for the time of K. In this case, while one first battery cell 111 supplies a discharge current (reverse current), as the charging switches 121 of the other remaining first battery cells 111 may be turned off, the discharge current (reverse current) may not flow to the other remaining first battery cells 111. Then, M second battery cells may be charged by the provided discharge current (reverse current).

As described herein, each of the M second battery cells may be charged with a current with an amount of Y/M for a time of NK for which the discharge current (reverse current) flows from the N first battery cells 111. In this case, the variables X, Y, N, M, and K may be natural numbers, and charge states of all the battery cells may be systematically changed to be the same as each other after performing one cycle according to the number and situations of the battery cells.

The charging control device 170 may charge N+M battery cells at the same time using a time and power with which N first battery cells 111 are pulse charged.

For example, a method of charging the battery 110 when the battery 110 is formed as illustrated in FIG. 4A will be described.

In this case, as illustrated in FIG. 4B, the charging control device 170 may turn on first charging switches 121a, 121b, and 121c of first battery cells 111a, 111b, and 111 c, turn off the second charging switch 125 of the second battery cell 115, turn on the first switch 130, and turn off the second switch 140. Then, the charging control device 170 may provide a charge pulse to the first battery cells 111a, 111b, and 111c for an on-time of the charge pulse. Then, the first battery cells 111a, 111b, and 111c may be charged by the charge pulse.

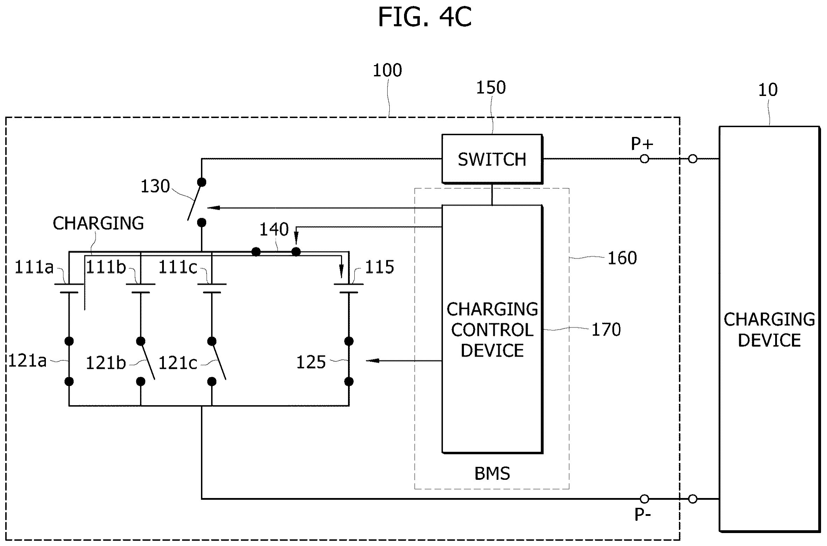

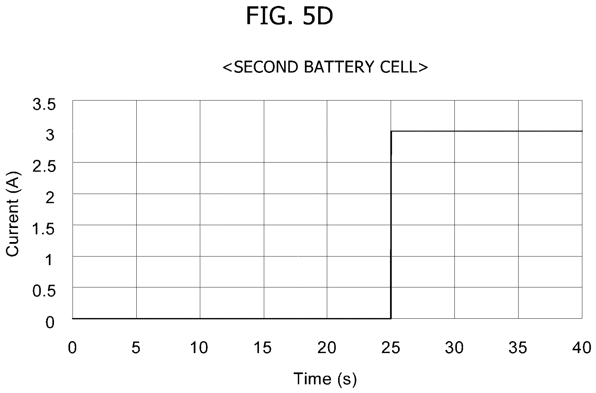

When the first battery cells 111a, 111b, and 111c are completely charged for the on-time of the charge pulse, the charging control device 170 may turn off the charge pulse, as illustrated in FIG. 4C, turn on only the charging switch 121a of a battery cell-1 111a of the first battery cells 11la, 111b, and 111c, turn off the charging switches 121b and 121c of a battery cell-2 111b and a battery cell-3 111c, turn on the charging switch 125 of the second battery cell 115, turn off the first switch 130, and turn on the second switch 140. Then, the battery cell-1 111a may be discharged for a charge pulse off-time, and a reverse current (discharge current) due to discharging of the battery cell-1 111a may charge the second battery cell 125. For example, as illustrated in FIG 5A, when the battery cell-1 111a is discharged with a current with an amount of 3 A for 5 seconds between 25 seconds and 30 seconds, as illustrated in FIG. 5D, the second battery cell 115 may be charged with the current with an amount of 3 A for 5 seconds between 25 seconds and 30 seconds.

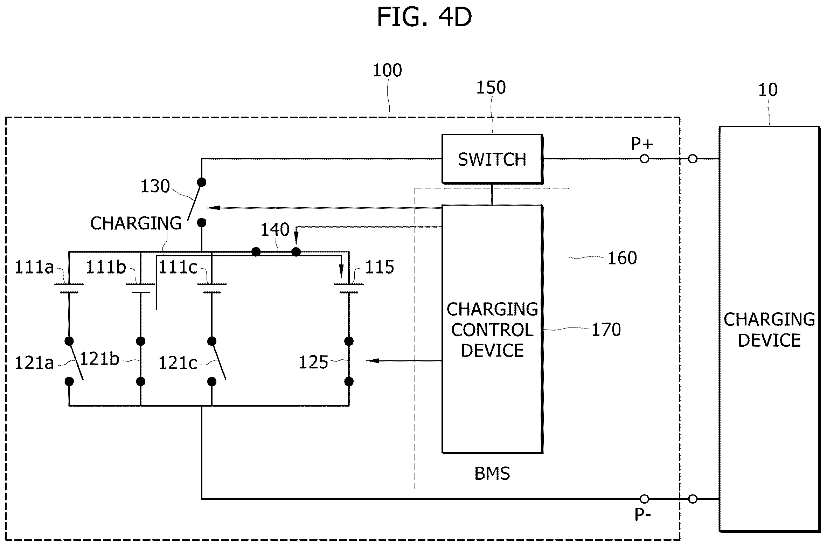

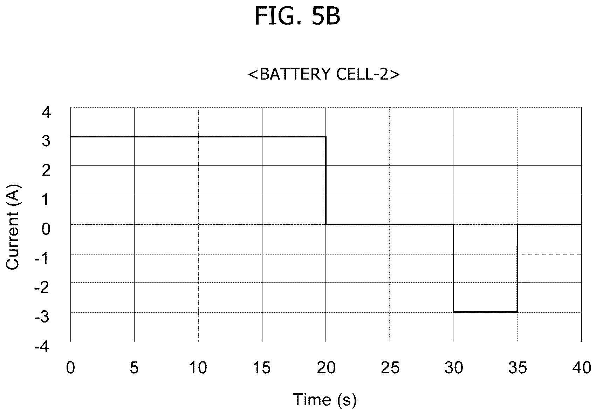

When the second battery cell 115 is completely charged by the battery cell-1 111a, as illustrated in FIG. 4D, the charging control device 170 may turn on only a charging switch 121b of the battery cell-2 111b among the first battery cells 111a, 111b, and 111c, turn off the charging switches 121a and 121c of the battery cell-1 111a and the battery cell-3 111c, turn on the charging switch 125 of the second battery cell 115, turn off the first switch 130, and turn on the second switch 140. Then, the battery cell-2 115 may be discharged for a charge pulse off-time, and a reverse current (discharge current) due to discharging of the battery cell-2 111b may charge the second battery cell 115. For example, as illustrated in FIG. 5B, when the battery cell-2 111b is discharged with a current with an amount of 3 A for 5 seconds between 30 seconds and 35 seconds, as illustrated in FIG. 5D, the second battery cell 115 may be charged with the current of 3 A for 5 seconds between 30 seconds and 35 seconds.

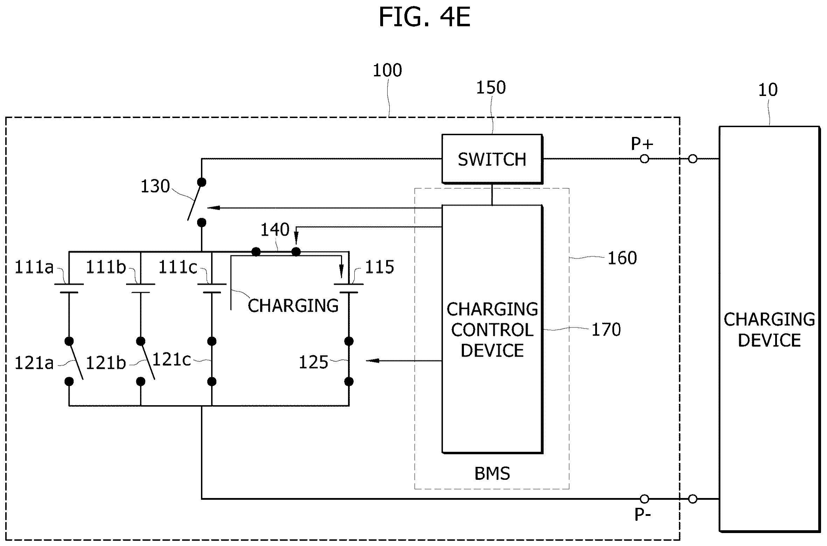

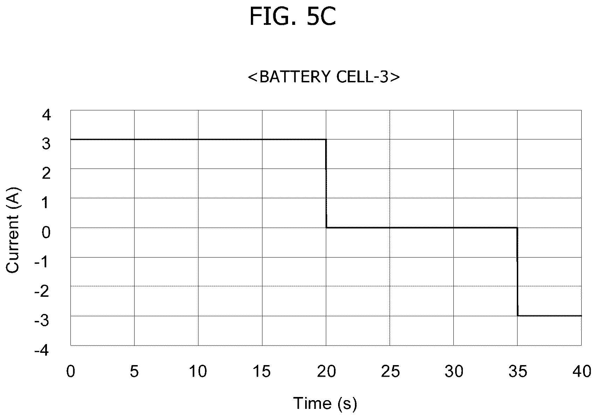

When the second battery cell 115 is completely charged by the battery cell-2 111b, as illustrated in FIG. 4E, the charging control device 170 may turn on only a charging switch 121c of the battery cell-3 111c among the first battery cells 111a, 111b, and 111c, turn off the charging switches 121a and 121b of the battery cell-1 111a and the battery cell-2 111b, turn on the charging switch 125 of the second battery cell 115, turn off the first switch 130, and turn on the second switch 140. Then, the battery cell-3 111c may be discharged for a charge pulse off-time, and a reverse current (discharge current) due to discharging of the battery cell-3 111c may charge the second battery cell 115. For example, as illustrated in FIG. 5C, when the battery cell-3 111c is discharged with a current of an amount of 3 A for 5 seconds between 35 seconds and 40 seconds, as illustrated in FIG. 5D, the second battery cell 115 may be charged with the current with the amount of 3 A for 5 seconds between 35 seconds and 40 seconds.

Then, the second battery cell 115 may be charged with the same amount as a charge amount of each of the first battery cells 111a, 111b, and 111c. That is, as illustrated in FIG. 5D, the second battery cell 115 may be charged with a current with an amount of 3 A for 15 seconds between 25 seconds and 40 seconds.

As described herein, as illustrated in FIG. 6, since the second battery cell 115 is charged with a relatively low current of 3 A, a lifetime of the battery cell may not be adversely affected. However, in the conventional case, since a high current of 9 A is provided to a reverse current charging cell, a lifetime of the battery cell can be adversely affected.

Meanwhile, although it has been described with respect to FIGS. 4A to 4E that the second battery cell 115 includes one battery cell, the second battery cell 115 may include a plurality of battery cells.

For example, a method of charging a battery 110 when the battery 110 is formed as illustrated in FIG. 7A will be described.

In this case, as illustrated in FIG. 7B, a charging control device 170 may turn on first charging switches 121a, 121b, and 121c of first battery cells 111a, 111b, and 111c, turn off second charging switches 125a and 125b of second battery cells 115a and 115b, turn on a first switch 130, and turn off a second switch 140. Then, the charging control device 170 may provide a charge pulse to the first battery cells 111a, 111b, and 111c for an on-time of the charge pulse. Then, the first battery cells 111a, 111b, and 111c may be charged by the charge pulse.

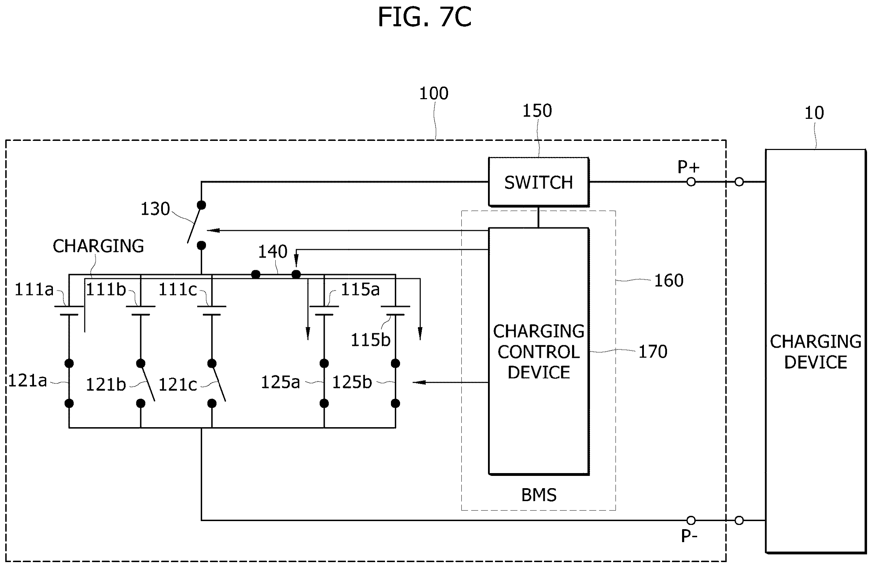

When the first battery cells 111a, 111b, and 111c are completely charged for the on-time of the charge pulse, the charging control device 170 may turn off the charge pulse, as illustrated in FIG. 7C, turn on only the charging switch 121a of a battery cell-1 111a among the first battery cells 111a, 111b, and 111c, turn off the charging switches 121b and 121c of a battery cell-2 111b and a battery cell-3 111c, turn on the charging switches 125a and 125b of a battery cell-4 115a and a battery cell-5 115b of the second battery cells 115a and 115b, turn off the first switch 130, and turn on the second switch 140. Then, the battery cell-1 111a may be discharged for a charge pulse off-time, and a reverse current (discharge current) due to discharging of the battery cell-1 111a may charge the battery cell-4 115a and the battery cell-5 115b of the second battery cells 115a and 115b. In this case, since the battery cell-4 115a and the battery cell-5 115b are connected in parallel, 1/2 of the reverse current (discharge current) of the battery cell-1 111a may be provided to each of the battery cell-4 115a and the battery cell-5 115b.

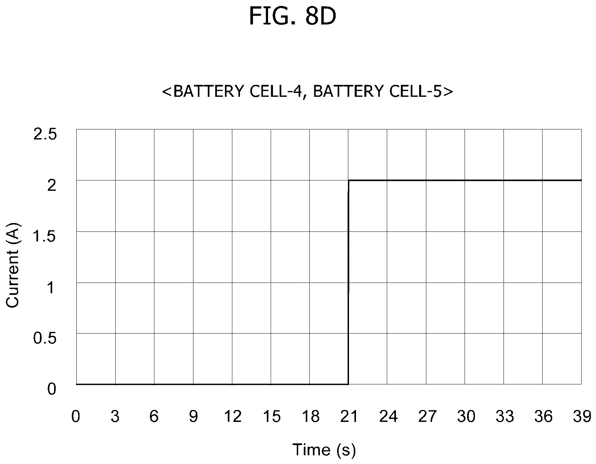

For example, as illustrated in FIG. 8A, when the battery cell-1 111a is discharged with a current with an amount of 4 A for 6 seconds between 21 seconds and 27 seconds, as illustrated in FIG. 8D, each of the battery cell-4 115a and the battery cell-5 115b of the second battery cells 115a and 115b may be charged with a current with an amount of 2 A for 6 seconds between 21 seconds and 27 seconds.

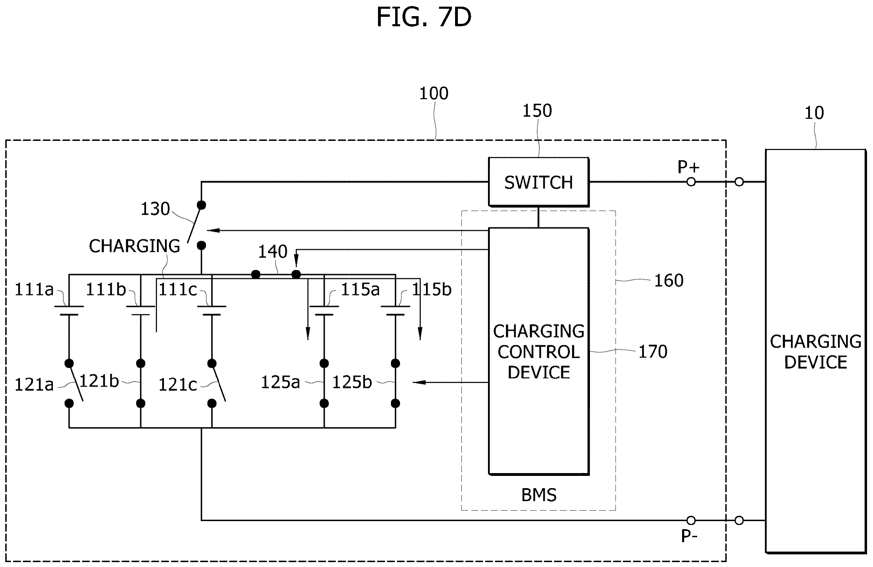

When the battery cell-4 115a and the battery cell-5 115b of the second battery cells 115a and 115b are completely charged by the battery cell-1 111a, as illustrated in FIG. 7D, the charging control device 170 may turn on only the charging switch 121b of the battery cell-2 111b among the first battery cells 111a, 111b, and 111c, turn off the charging switches 121a and 121c of the battery cell-1 111a and the battery cell-3 111c, turn on the charging switches 125a and 125b of the battery cell-4 115a and the battery cell-5 115b of the second battery cells 115a and 115b, turn off the first switch 130, and turn on the second switch 140. Then, the battery cell-2 111b may be discharged for a charge pulse off-time, and a reverse current (discharge current) due to discharging of the battery cell-2 111b may charge the battery cell-4 115a and the battery cell-5 115b of the second battery cells 115a and 115b. In this case, since the battery cell-4 115a and the battery cell-5 115b are connected in parallel, 1/2 of the reverse current (discharge current) of the battery cell-2 111b may be provided to each of the battery cell-4 115a and the battery cell-5 115b.

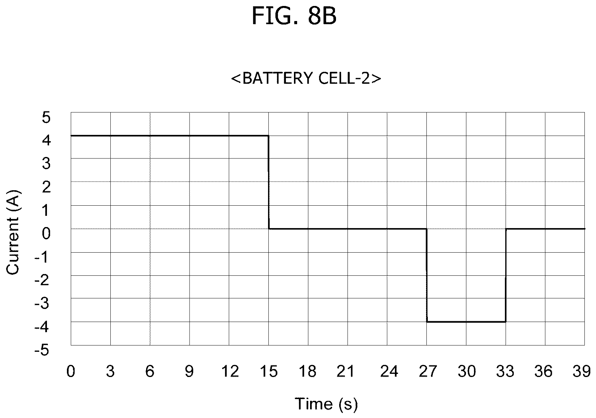

For example, as illustrated in FIG. 8B, when the battery cell-2 111b is discharged with a current with an amount of 4 A for 6 seconds between 27 seconds and 33 seconds, as illustrated in FIG. 8D, each of the battery cell-4 115a and the battery cell-5 115b of the second battery cells 115a and 115b may be charged with a current with an amount of 2 A for 6 seconds between 27 seconds and the 33 seconds.

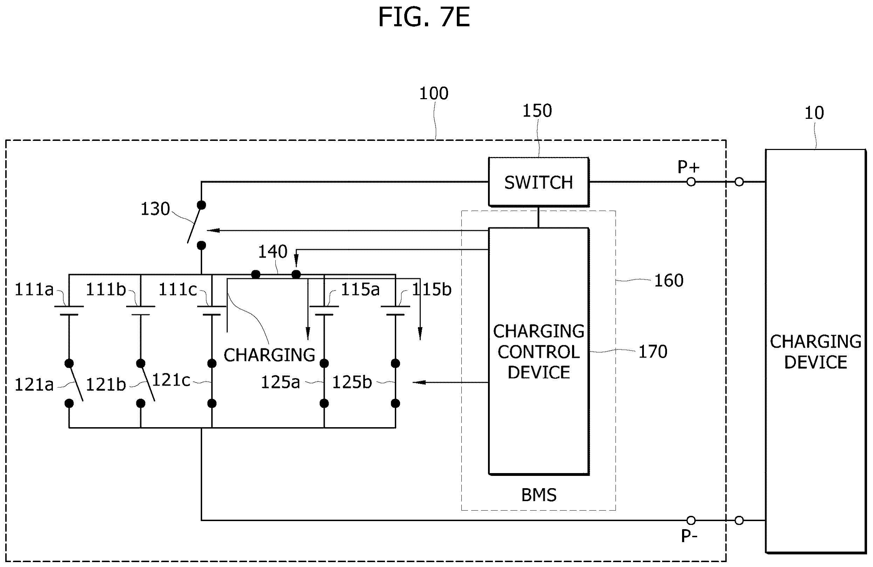

When the battery cell-4 115a and the battery cell-5 115b of the second battery cells 115a and 115b are completely charged by the battery cell-2 111b, as illustrated in FIG. 7E, the charging control device 170 may turn on only the charging switch 121c of the battery cell-3 111c among the first battery cells 111a, 111b, and 111c, turn off the charging switches 121a and 121b of the battery cell-1 111a and the battery cell-2 111b, turn on the charging switches 125a and 125b of the second battery cells 115a and 115b, turn off the first switch 130, and turn on the second switch 140. Then, the battery cell-3 111c may be discharged for the charge pulse off-time, and a reverse current (discharge current) due to discharging of the battery cell-3 111c may charge the battery cell-4 115a and the battery cell-5 115b of the second battery cells 115a and 115b. In this case, since the battery cell-4 115a and the battery cell-5 115b are connected in parallel, 1/2 of the reverse current (discharge current) of the battery cell-3 111c may be provided to each of the battery cell-4 115a and the battery cell-5 115b.

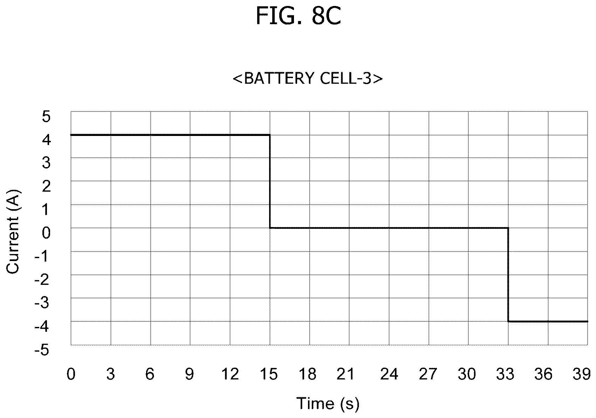

For example, as illustrated in FIG. 8C, when the battery cell-3 111c is discharged with a current with an amount of 4 A for 6 seconds between 33 seconds and 39 seconds, as illustrated in FIG. 8D, each of the battery cell-4 115a and the battery cell-5 115b of the second battery cells 115a and 115b may be charged with a current with an amount of 2 A for 6 seconds between 33 seconds and 39 seconds.

Then, the battery cell-4 115a and the battery cell-5 115b of the second battery cells 115a and 115b may be charged with the same amount as a charge amount of each of the first battery cells 111a, 111b, and 111c. In this case, the charging control device 170 may increase a charging time of each of the battery cell-4 115a and the battery cell-5 115b to charge each of the battery cell-4 115a and the battery cell-5 115b with the same amount as a charge amount of each of the first battery cells 111a, 111b, and 111c. That is, as illustrated in FIG. 8D, each of the battery cell-4 115a and the battery cell-5 115b may be charged with the current with the amount of 2 A for 18 seconds between 21 seconds and 39 seconds.

Meanwhile, the charging control device 170 may further include a memory (not shown) in which at least one command executed by the control part 174 is stored. Particularly, the memory may store a command (program, application, applet, etc.) which adjusts a charge critical voltage or discharge critical voltage on the basis of a cell voltage difference between the battery cells and a present SoC of the battery during charging or discharging of the battery, and stored information may be selected by the control part 174 as necessary. The memory may be implemented as a volatile storage medium and/or a nonvolatile storage medium, for example, a read only memory (ROM), a random-access memory (RAM), a flash memory, or an electrically erasable programmable read-only memory (EEPROM).

According to the present disclosure described herein, another battery cell can be charged for an off-time of a charge pulse using a discharge current (reverse current) discharged from the battery cell during pulse charging to reduce a total charging time of the battery.

According to the present disclosure, another battery cell is charged for an off-time of a charge pulse using a discharge current (reverse current) discharged from the battery cell during pulse charging, thereby having effects of not only improving power efficiency, but also minimizing power loss, and more effectively using a power source.

According to the present disclosure, as the battery cell is charged by controlling a timing at which a discharge current (reverse current) flows by controlling the switch, there is an effect of increasing a lifetime of the battery cell charged with the discharge current (reverse current).

The term "part" used in the present specification may include a unit implemented using hardware, software, or firmware and may be interchangeably used with terms such as "logic," "logical block," "component," or "circuit." A "part" may be an integrally formed component or a minimum unit or a part of the component serving one or more functions. For example, a "part" may be implemented as a type of application specific integrated circuit (ASIC) according to embodiments.

Each embodiment described in this specification can be implemented through, for example, a method, a process, an apparatus, a software program, a data stream, or a signal. Even when the embodiment is described as being implemented in only a single form (for example, as a method), the described features may be implemented in another form (for example, as an apparatus or program). The apparatus may be implemented using proper hardware, software, firmware, or the like. For example, the method may be implemented in an apparatus such as a processor or the like which is generally referred to as a processing device including a computer, a microprocessor, an integrated circuit, or a programmable logic device. The processor also includes a communication device such as a computer, a cell phone, a portable/personal digital assistant (PDA) terminal, or another device which facilitates communication of information between end users.

According to the present disclosure, when pulse charging is performed, a discharge current (reverse current) discharged from a battery cell is used to charge another battery cell for an off-time of a charge pulse, thereby reducing a total charging time of a battery.

According to the present disclosure, when pulse charging is performed, as a discharge current (reverse current) discharged from a battery cell is used to charge another battery cell for an off-time of a charge pulse, there are effects that not only is power efficiency improved, but a power loss is also minimized, thereby more effectively using a power resource.

According to the present disclosure, a battery cell is charged by controlling a switch to control a timing at which a discharge current (reverse current) flows, thereby improving a lifetime of the battery cell charged by the discharge current (reverse current).

However, effects that can be achieved through the present disclosure are not limited to the herein-described effects and other effects that are not described may be clearly understood by those skilled in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the claims, herein.

## Claims

1. A battery pack comprising:
a plurality of battery cells;
a plurality of charging switches, each of which is connected to one of the battery cells;
a first switch connected to at least a first battery cell charged by a charge pulse among the plurality of battery cells;
a second switch which connects a second battery cell which is a remaining battery cell excluding the first battery cell among the plurality of battery cells to the first battery cell; and
a charging control device which charges the first battery cell and the second battery cell by controlling at least one of the plurality of charging switches, the first switch, and the second switch to be turned on or off according to an on/off-time of the charge pulse when the plurality of battery cells are charged through pulse charging.

2. The battery pack of claim 1, wherein each of the plurality of charging switches is connected to a corresponding battery cell in series.

3. The battery pack of claim 1 or claim 2, wherein the first switch is configured to be controlled to be turned on for the on-time of the charge pulse and turned off for the off-time of the charge pulse during the pulse charging.

4. The battery pack of any preceding claim, wherein the second switch is configured to be controlled to be turned off for the on-time of the charge pulse and turned on for the off-time of the charge pulse during the pulse charging.

5. The battery pack of any preceding claim, wherein:
the first battery cell is configured to be charged by the charge pulse for the on-time of the charge pulse; and
the second battery cell is configured to be charged by a discharge current of the first battery cell for the off-time of the charge pulse.

6. The battery pack of claim 5, wherein the charging control device is configured to:
control at least one of the plurality of charging switches, the first switch, and the second switch to be turned on or off for the on-time of the charge pulse to charge the first battery cell; and
control at least one of the plurality of charging switches, the first switch, and the second switch to be turned on or off for the off-time of the charge pulse such that the second battery cell is charged by a discharge current discharged by the first battery cell.

7. The battery pack of claim 6, wherein the charging control device is configured to charge the first battery cell by, among the plurality of charging switches, turning on a first charging switch connected to the first battery cell, turning off a second charging switch connected to second battery cell, turning on the first switch, turning off the second switch, and providing the charge pulse to the first battery cell for the on-time of the charge pulse.

8. The battery pack of claim 6 or claim 7, wherein the charging control device is configured to control the at least one of the plurality of charging switches, the first switch, and the second switch to be turned on or off to apply the discharge current discharged by the first battery cell to the second battery cell for the off-time of the charge pulse such that a charge amount of the second battery cell becomes the same as a charge amount of the first battery cell.

9. The battery pack of claim 8, wherein the charging control device is configured to repeat a process of turning on the first charging switch connected to a foremost first battery cell, turning off the first charging switch connected to a remaining first battery cell, turning off the first switch, turning on the second switch, applying a discharge current of the foremost first battery cell to the second battery cell, turning off the charging switch connected to the foremost first battery cell, turning on a charging switch connected to a next first battery cell, and applying a discharge current of the next first battery cell to the second battery cell.

10. The battery pack of claim 9, wherein, when the plurality of battery cells include N first battery cells and M second battery cells, the charging control device being configured to perform control such that:
the first battery cells are charged by providing a charge pulse with an amount of Y to the N first battery cells for the on-time of the charge pulse; and
the N first battery cells provide a discharge current with the amount of Y to the M second battery cells for a time of K which is the off-time of the charge pulse,
wherein N, M, K, and Y are natural numbers.

11. The battery pack of claim 10, wherein each of the M second battery cells is configured to be charged with a current with an amount of Y/M for a time of NK for which the discharge current flows from the N first battery cells.

12. A method of charging a battery pack which includes a plurality of charging switches, each of which is connected to one of a plurality of battery cells, a first switch connected to at least a first battery cell, and a second switch connecting at least a second battery cell to the first battery cell, the method comprising:
charging, by a charging control device, the first battery cell by controlling at least one of the plurality of charging switches, the first switch, and the second switch to be turned on or off and providing a charge pulse to the first battery cell for an on-time of the charge pulse; and
controlling, by the charging control device, at least one of the plurality of charging switches, the first switch, and the second switch such that the second battery cell is charged by a discharge current discharged by the first battery cell for an off-time of the charge pulse.

13. The method of claim 12, wherein, in the charging of the first battery cell, the charging control device charges the first battery cell by, among the plurality of charging switches, turning on a first charging switch connected to the first battery cell, turning off a second charging switch connected to the second battery cell, turning on the first switch, turning off the second switch, and providing the charge pulse to the first battery cell for the on-time of the charge pulse.

14. The method of claim 12 or claim 13, wherein, in the controlling of the at least one of the plurality of charging switches, the first switch, and the second switch, the charging control device repeats a process of turning on a first charging switch connected to a foremost first battery cell, turning off a first charging switch connected to a remaining first battery cell, turning off the first switch, turning on the second switch, applying a discharge current of the foremost first battery cell to the second battery cell, turning off the charging switch connected to the foremost first battery cell, turning on a charging switch connected to a next first battery cell, and applying a discharge current of the next first battery cell to the second battery cell.

15. The method of claim 14, wherein, in the controlling of the at least one of the plurality of charging switches, the first switch, and the second switch, when the plurality of battery cells include N first battery cells and M second battery cells, the charging control device performs control such that:
the first battery cells are charged by providing a charge pulse with an amount of Y to the N first battery cells for an on-time of the charge pulse; and
the N first battery cells sequentially provide a discharge current with the amount of Y to the M second battery cells for a time K which is an off-time of the charge pulse,
wherein N, M, K, and Y are natural numbers, and
wherein, in the controlling of the at least one of the plurality of charging switches, the first switch, and the second switch, each of the M second battery cells is charged with a current with an amount of Y/M for a time of NK for which the discharge current flows from the N first battery cells.
